# EUROPEAN PATENT SPECIFICATION

(11) **EP 1 536 120 B1**
(45) Date of publication and mention of the grant of the patent: **30.01.2008**
(21) Application number: 04028130.5
(22) Date of filing: 26.11.2004
(51) Int. Cl.: F02D 41/02, F02D 35/00, F02D 41/00, F01N 3/023

(54) **Exhaust gas control apparatus for internal combustion engine and control method thereof**
Abgassteuerungsvorrichtung und -methode für eine Brennkraftmaschine
Procédé et dispositif de commande des gaz d'échappement pour un moteur à combustion interne

(30) Priority: 26.11.2003 JP 2003396166
(43) Date of publication of application: 01.06.2005
(73) Proprietor: Toyota Jidosha Kabushiki Kaisha, Toyota-shi, Aichi-ken, 471-8571 (JP)
(72) Inventor: Tomita, Tetsuji, Toyota-shi Aichi-ken, 471-8571 (JP); Sugiyama, Tatsumasa, Toyota-shi Aichi-ken, 471-8571 (JP); Tahara, Jun, Toyota-shi Aichi-ken, 471-8571 (JP)
(74) Representative: Kuhnen & Wacker

(56) References cited:
- WO-A-20/04076837
- DE-A1- 4 330 830
- FR-A- 2 830 274
- US-A- 5 609 021
- US-A1- 2003 106 309
- PATENT ABSTRACTS OF JAPAN vol. 017, no. 517 (M-1481), 17 September 1993 (1993-09-17) & JP 05 133285 A (NISSAN MOTOR CO LTD), 28 May 1993 (1993-05-28)

## Description

### BACKGROUND OF THE INVENTION

### 1. Field of the Invention

The invention relates to an exhaust gas control apparatus which purifies exhaust gas discharged from an internal combustion engine using an exhaust gas control catalyst, and a control method thereof.

### 2. Description of the Related Art

An exhaust gas control apparatus for a diesel engine is known, in which particulate matter (PM) contained in exhaust gas is captured using an exhaust gas control catalyst provided in an exhaust passage, and a catalyst recovery control for recovering the exhaust gas control catalyst by removing the accumulated particulate matter is performed. When the catalyst recovery control is performed, the amount of particulate matter accumulated in the exhaust gas control catalyst is estimated based on an operating state of an internal combustion engine. When a predetermined condition for recovery including a condition that the estimated amount of the accumulated particulate matter is equal to or larger than a predetermined value, fuel is supplied to a portion upstream of the exhaust gas control catalyst in the exhaust passage, from an exhaust gas fuel supply valve that is provided separately from a fuel injection valve for driving the engine. The supplied fuel is burned in the exhaust gas control catalyst, and heat is generated. The heat increases the temperature of the exhaust gas control catalyst (hereinafter, referred to as "catalyst temperature") to a temperature at which the particulate matter can be removed (approximately 600 °C). Accordingly, the particulate matter can be burned to be removed, and thus the exhaust gas control catalyst is recovered.

In the exhaust gas control apparatus, the exhaust gas control catalyst does not perform an exhaust gas control function when the catalyst temperature exceeds a certain value (i.e., an upper limit temperature). Therefore, it is necessary to prevent the catalyst temperature from exceeding the upper limit temperature. Accordingly, for example, when the engine is decelerated during the catalyst recovery control, an intake throttle valve in an intake passage is fully opened or substantially fully opened. In this technology, the amount of air contained in the exhaust gas is increased so as to increase the amount of heat that is removed by the air in the exhaust gas while the air in the exhaust gas passes through the exhaust gas control catalyst, whereby an increase in the catalyst temperature is suppressed.

As related art, for example, Japanese Patent Laid-Open Publication No. 2002-371889 (JP-A-2002-371889) discloses a technology in which an air-fuel ratio of exhaust gas is made rich for a predetermined time period when an engine is decelerated and a NOx catalyst is active for recovering the NOx catalyst, and then fuel cut is performed.

However, in the case where the engine is decelerated while the amount of accumulated particulate matter is large during the catalyst recovery control, when the intake throttle valve is fully opened or substantially fully opened as described above, the catalyst temperature may be sharply increased to exceed the upper limit temperature.

This phenomenon will be described below. In the aforementioned situation, the amount of exhaust gas is decreased due to deceleration, and the amount of heat removed by the air in the exhaust gas is decreased. Meanwhile, since the amount of the accumulated particulate matter is large, the amount of heat generated due to oxidation of the particulate matter is increased. Further, the supply amount of oxygen is increased due to opening of the intake throttle valve, and thus heat generation is promoted. As a result, the amount of heat generated due to oxidation of the particulate matter becomes larger than the amount of heat removed by the air in the exhaust gas. Accordingly, the catalyst temperature may be increased to exceed the upper limit temperature.

In the technology disclosed in the aforementioned Japanese Patent Laid-Open Publication No. 2002-371889, the amount of particulate matter accumulated in the exhaust gas control catalyst can be prevented from being increased by fuel cut. However, in the case where the fuel injection is restarted after fuel cut, for example, when the vehicle starts to run at a constant speed after deceleration, the particulate matter may start to be accumulated again, and thus the amount of the accumulated particulate matter may be increased. Accordingly, even in the technology disclosed in the aforementioned Japanese Patent Laid-Open Publication No. 2002-371889, the aforementioned problem may occur when the engine is decelerated while the amount of the accumulated particulate matter is large during the catalyst recovery control.

Document WO 2004/0767837 A1 discloses a method for controlling recovery of an exhaust partculate-purifying filter and a program for controlling the recovery.There, an ECU opens an EGR control valve so that an EGR amount is increased, or the ECU restricts the amount of air sucked by a suction throttle valve and increases the amount of fuel injection so that the increase in oxygen concentration is prevented, or the ECU increases the amount of air sucked by a turbo charger so that an exhaust gas flow rate to a DPF is increased. By any one or a combination of the above, rapid increase in oxygen concentration in the DPF caused by rapid retardation is prevented. Further, the increase in temperature in the DPF can be limited to a low level by increasing an exhaust gas flow rate passing through the DPF.

Further, document US 2003/0106309 A1 discloses an exhaust emission control device, wherein a control unit activates regeneration assist means, if a specific operating state involving incomplete combustion of particulates by NO₂ continues for a predetermined period or more, as a first determination condition, and controls an exhaust gas temperature or a temperature of a catalyst to enhance the conversion efficiency of the catalyst into NO₂ thereby continuously regenerating the particulates. The control unit activates forced regeneration means, if a deposited amount of particulates detected by deposited amount detecting means exceeds a predetermined value, as a second determination condition, and controls the exhaust gas temperature or a temperature of a filter to be higher than that of when the regeneration assist means is activated to forcibly regenerate the filter. The control unit activates either the forced regeneration means or the regeneration assist means in accordance with the temperature sensed by temperature sensing means, if the first and second determination conditions are simultaneously established.

### SUMMARY OF THE INVENTION

It is an object of the invention to provide an exhaust gas control apparatus for an internal combustion engine and a control method thereof, which can suppress damage to an exhaust gas control function of an exhaust gas control catalyst due to an excessive increase in a catalyst temperature even when the internal combustion engine is decelerated while an amount of accumulated particulate matter is large during a catalyst recovery control.

A first aspect of the invention relates to an exhaust gas control apparatus for an internal combustion engine according to claim 1.

The particulate matter in the exhaust gas discharged from the internal combustion engine is captured by the exhaust gas control catalyst. The particulate matter thus captured and accumulated in the exhaust gas control catalyst is burned and removed, whereby the exhaust gas control catalyst is recovered. Air in the exhaust gas removes heat of the exhaust gas control catalyst while passing through the exhaust gas control catalyst, and thus suppress an increase in the catalyst temperature. However, since the amount of the exhaust gas is decreased, and accordingly the amount of air in the exhaust gas is decreased while the internal combustion engine is decelerated, the amount of heat removed by the air is decreased, as compared to when the engine is not decelerated.

Meanwhile, while the exhaust gas control catalyst is being recovered, the accumulated particulate matter reacts with oxygen in the air (i.e., the accumulated particulate matter is oxidized), and heat is generated. The amount of generated heat is increased as the amount of particulate matter is increased, and as the amount of air (oxygen) is increased.

The degree of a change (an increase) in the temperature of the exhaust gas control catalyst is decided based on balance between the amount of heat removed by the air in the exhaust gas and the amount of generated heat due to oxidation of the particulate matter. In this regard, in the exhaust gas control apparatus according to the second aspect of the invention, an increase in the amount of air taken in the internal combustion engine is suppressed by a large amount when the internal combustion engine is decelerated while the amount of accumulated particulate matter is large during recovery of the exhaust gas control catalyst, as compared to when the engine is decelerated while the amount of the accumulated particulate matter is small. Therefore, the amount of oxygen involved in the oxidation reaction is decreased, and accordingly the amount of heat generated due to the reaction is decreased. As a result, it is possible to suppress damage to the exhaust gas control function of the exhaust gas control catalyst due to an excessive increase in the catalyst temperature.

The control means may suppress the increase in the amount of air taken in the internal combustion engine by a larger amount as the amount of the accumulated particulate matter becomes larger.

With the aforementioned configuration, when the amount of the accumulated particulate matter is small, the control means suppresses the increase in the amount of air taken in the internal combustion engine by a small amount, and the amount of air taken in the internal combustion engine is large. Therefore, the amount of the particulate matter involved in the oxidation reaction is small, but the amount of oxygen involved in the oxidation reaction is large. Meanwhile, when the amount of the accumulated particulate matter is large, the control means suppresses the increase in the amount of air taken in the internal combustion engine by a large amount, and the amount of air taken in the internal combustion engine is small. Therefore, the amount of the particulate matter involved in the oxidation reaction is large, but the amount of oxygen involved in the oxidation reaction is small. Accordingly, the amount of heat generated due to burning of the particulate matter can be made substantially constant irrespective of the amount of the accumulated particulate matter, and accordingly the catalyst temperature can be made substantially constant.

The internal combustion engine may include an intake throttle valve which adjusts an amount of air taken in a combustion chamber through an intake passage; and the control means controls the amount of air taken in the internal combustion engine by operation of the intake throttle valve.

With the aforementioned configuration, when the internal combustion engine is decelerated while the amount of accumulated particulate matter is large during recovery of the exhaust gas control catalyst, the opening operation of the intake throttle valve is suppressed, as compared when the engine is decelerated while the amount of the accumulated particulate matter is small. Since the opening operation of the intake throttle valve is suppressed, the increase in the amount of air taken in the combustion chamber through the intake passage is suppressed, which decreases the amount of oxygen involved in the oxidation reaction of the particulate matter accumulated in the exhaust gas control catalyst.

The internal combustion engine may include an exhaust gas recirculation device which recirculates part of exhaust gas to a combustion chamber through an intake passage; and the control means may suppress the increase in the amount of air taken in the internal combustion engine by increasing an amount of exhaust gas which is recirculated by the exhaust gas recirculation device.

With the aforementioned configuration, when the internal combustion engine is decelerated while the amount of the accumulated particulate matter is large, the amount of exhaust gas which is recirculated to the combustion chamber through the intake passage by the exhaust recirculation device is increased, as compared to when the engine is decelerated while the amount of the accumulated particulate matter is small. Accordingly, the amount of air taken in the combustion chamber is decreased, which decreases the amount of oxygen involved in the oxidation reaction the amount of oxygen involved in the oxidation reaction of the particulate matter accumulated in the exhaust gas control catalyst.

The control means may make a determination on the amount of the accumulated particulate matter based on a gradient of an increase in a temperature of the exhaust gas control catalyst, and may suppress the increase in the amount of air taken in the internal combustion engine using a result of the determination.

In general, during recovery of the exhaust gas control catalyst, the amount of heat generated due to the oxidation reaction tends to be larger, and the gradient (degree) of the increase in the catalyst temperature tends to be larger as the amount of the accumulated particulate matter becomes larger. Thus, by predefining the relationship between the gradient of the increase in the catalyst temperature and the amount of the accumulated particulate matter, the amount of the accumulated particulate matter can be determined based on the gradient of the increase in the catalyst temperature. The increase in the amount of air taken in the internal combustion engine is suppressed based on the result of the determination. Accordingly, it is possible to reliably suppress damage to the exhaust gas control function of the exhaust gas control catalyst due to an excessive increase in the catalyst temperature. Also, using the difference between the amount of the accumulated particulate matter that is determined based on the gradient of the increase in the catalyst temperature and the amount of the accumulated particulate matter that is obtained based on the engine operating state when the gradient is obtained, the amount of the accumulated particulate matter that is obtained based on the engine operating state thereafter may be corrected.

The control means may determine that the amount of the accumulated particulate matter is large, and may suppress the increase in the amount of air taken in the internal combustion engine when the gradient of the increase in the temperature of the exhaust gas control catalyst is equal to or larger than a reference value.

When the gradient of the increase in the catalyst temperature is relatively small, there may be no possibility that the catalyst temperature exceeds an upper limit temperature at which the exhaust gas control catalyst does not perform the exhaust gas control function. In this case, it is preferable to promote burning of the particulate matter in order to recover the exhaust gas control catalyst.

Therefore, the increase in the amount of air taken in the internal combustion engine may be suppressed when the gradient of the increase in the temperature of the exhaust gas control catalyst is equal to or larger than the reference value as a result of comparison therebetween, and the increase in the amount of air taken in the internal combustion engine may not be suppressed when the gradient of the increase in the temperature of the exhaust gas control catalyst is smaller than the reference value. For example, the reference value may be set to the largest value in a region in which the catalyst temperature does not exceed the upper limit temperature even if the increase in the amount of air taken in the internal combustion engine is not suppressed, in an entire range of values of the gradient. Since it is determined whether it is necessary to suppress the increase in the amount of air taken in the internal combustion engine in this manner, and the increase in the amount of air taken in the internal combustion engine is suppressed only when necessary, it is possible to suppress damage to the exhaust gas control function, and to give priority to the recovery of the catalyst when unnecessary.

The control means may suppress the increase in the amount of air taken in the internal combustion engine by a larger amount as a difference between the gradient of the increase in the temperature of the exhaust gas control catalyst and a predetermined reference value becomes larger.

As the gradient of the increase in the catalyst temperature becomes larger, that is, as the difference between the gradient and a certain value (the reference value) becomes larger, the amount of the accumulated particulate matter becomes larger. For example, the reference value may be set to the largest value in a region in which the catalyst temperature does not exceed the upper limit temperature even if the increase in the amount of air taken in the internal combustion engine is not suppressed, in an entire range of values of the gradient.

Accordingly, by suppressing the amount of air taken in the internal combustion engine by a larger amount as the difference between the gradient of the increase in the catalyst temperature and the reference value becomes larger, the particulate matter can be oxidized (burned) using oxygen of the amount corresponding to the amount of the accumulated particulate matter, and an excessive increase in the catalyst temperature can be effectively suppressed by making the amount of heat substantially constant, irrespective of the amount of the accumulated particulate matter.

When the reference value is set as described above, and the difference between the gradient of the increase in the catalyst temperature and the reference value is equal to or lower than 0, that is, when the gradient is small, the increase in the amount of air taken in the internal combustion engine is not suppressed, whereby the exhaust gas control catalyst can be recovered while suppressing an excessive increase in the catalyst temperature.

The control means may estimate the amount of the accumulated particulate matter based on a gradient of the increase in the temperature of the exhaust gas control catalyst, and may suppress the increase in the amount of air taken in the internal combustion engine when the estimated amount of the accumulated particulate matter is equal to or larger than a predetermined amount.

By predefining the relationship between the gradient of the increase in the catalyst temperature and the amount of the accumulated particulate matter, the amount of the accumulated particulate matter can be estimated based on the gradient of the increase in the catalyst temperature.

When the estimated amount of the accumulated particulate matter is equal to or larger than a certain value (the predetermined value) as a result of comparison therebetween, it can be determined that the amount of the accumulated particulate matter is large. The predetermined value may be set to a value corresponding to the largest value in a region in which the catalyst temperature does not exceed the upper limit temperature even if the increase in the amount of air taken in the internal combustion engine is not suppressed, in an entire range of values of the gradient.

Accordingly, by suppressing the increase in the amount of air taken in the internal combustion engine when the amount of the accumulated particulate matter is equal to or larger than the predetermined value and it is determined that the amount of the accumulated particulate matter is large, the amount of oxygen involved in the oxidation reaction of the particulate matter can be decreased, and the increase in the amount of heat generated due to the oxidation reaction can be suppressed in spite of the large amount of the accumulated particulate matter. As a result, it is possible to reliably suppress damage to the exhaust gas control function due to an excessive increase in the catalyst temperature.

Since the predetermined value is set as described above, and the increase in the amount of air taken in the internal combustion engine is not suppressed when the amount of the accumulated particulate matter is smaller than the predetermined value, the exhaust gas control catalyst can be recovered while suppressing an excessive increase in the catalyst temperature.

A second aspect of the invention relates to a method according claim 10, in which an exhaust gas control catalyst provided in an exhaust passage for an internal combustion engine is recovered by burning and removing particulate matter accumulated in the exhaust gas control catalyst.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
FIG. 1 is a schematic diagram showing the configuration of an exhaust gas control apparatus for an engine according to an embodiment of the invention;
FIG. 2 is a flowchart showing a procedure for controlling an intake air amount when the engine is decelerated while the amount of accumulated particulate matter is large during a catalyst recovery control;
FIG. 3 is a schematic diagram showing the structure of a map used for calculating a target throttle valve opening degree based on the amount of the accumulated particulate matter;
FIG. 4A is a schematic diagram showing the structure of a map used for estimating the amount of the accumulated particulate matter based on a gradient of an increase in a catalyst temperature;
FIG 4B is a schematic diagram showing the structure of a map used for estimating a correction amount for the amount of the accumulated particulate matter that is obtained based on an engine operating state; and
FIG. 5 is a time chart explaining operation of the exhaust gas control apparatus.

### DETAILED DESCRIPTION OF THE PREFERRED EMBODIMENTS

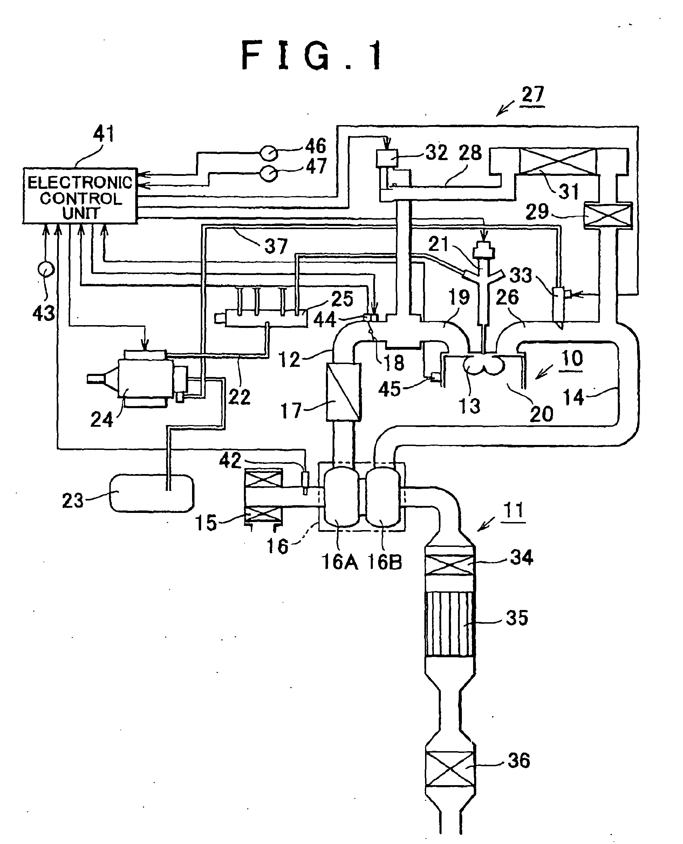

Hereinafter, an embodiment of the invention will be described with reference to the accompanying drawings. FIG 1 shows a diesel engine (hereinafter, referred to simply as "engine") 10 installed in a vehicle, and an exhaust gas control apparatus 11 for the engine 10. The engine 10 mainly includes an intake passage 12, a combustion chamber 13, and an exhaust passage 14. An air cleaner 15 for purifying air taken in the intake passage 12 is provided in the most upstream side of the intake passage 12. In the engine 10, a compressor 16A of a turbocharger 16, an intercooler 17, and an intake throttle valve 18 are provided in this order in a direction from the air cleaner 15 to the downstream side of the intake passage 12. An intake manifold 19 is provided downstream of an intake throttle valve 18 in the intake passage 12, as a branch portion of the intake passage 12. The intake passage 12 is connected to the combustion chamber 13 of each cylinder of the engine 10 through this branch portion.

In the engine 10, a fuel injection valve 21 for injecting fuel used for combustion in the combustion chamber 13 is provided for each combustion chamber 13. Fuel is supplied to each fuel injection valve 21 from a fuel tank 23 through a fuel supply passage 22. In the fuel supply passage 22, a fuel pump 24, and a common rail 25 are provided. The fuel pump 24 sucks the fuel from the fuel tank 23, and pressurizes and discharges the fuel. The common rail 25 is a high pressure fuel pipe for storing the discharged high-pressure fuel. The fuel injection valve 21 of each cylinder is connected to the common rail 25.

Meanwhile, in the exhaust passage 14, an exhaust manifold 26 for collecting exhaust gas discharged from the combustion chamber 13 of each cylinder, and a turbine 16B of a turbocharger 16 are provided. Further, in the engine 10, an exhaust gas recirculation (hereinafter, referred to as "EGR") device 27 which recirculates part of the exhaust gas to the intake air is employed. The EGR device 27 includes an EGR passage 28 which connects the intake passage 12 with the exhaust passage 14. An upstream side of the EGR passage 28 is connected to a portion between the exhaust manifold 26 and the turbine 16B in the exhaust passage 14. In the EGR passage 28, an EGR cooler catalyst 29 for purifying the recirculated exhaust gas, an EGR cooler 31 for cooling the recirculated exhaust gas, and an EGR valve 32 for adjusting the flow amount of the recirculated exhaust gas are provided in this order from the upstream side. A downstream side of the EGR passage 28 is connected to a portion between the intake throttle valve 18 and the intake manifold 19 in the intake passage 12.

In the engine 10 thus configured, the air taken in the intake passage 12 is purified by the air cleaner 15, and then is introduced to the compressor 16A of the turbocharger 16. The compressor 16A compresses the introduced air, and discharges the compressed air to the intercooler 17. The air whose temperature has been increased due to compression is cooled by the intercooler 17, and then is distributed to the combustion chamber 13 of each cylinder via the intake throttle valve 18 and the intake manifold 19. Thus flow amount of the air in the intake passage 12 is adjusted by controlling the opening degree of the intake throttle valve 18.

The fuel injection valve 21 injects the fuel into the combustion chamber 13 to which the air has been introduced during the compression stroke in each cylinder. The mixture of the air introduced through the intake passage 12 and the fuel injected from the fuel injection valve 21 is burned in the combustion chamber 13. The piston 20 is reciprocated by the high-temperature high-pressure combustion gas that is generated at this time, and thus the crankshaft (not shown) that is an output shaft of the engine 10 is rotated, whereby the driving power of the engine 10 is obtained. The rotational speed of the crankshaft is changed by a transmission (not shown), and the changed rotational speed is transmitted to driving wheels.

The exhaust gas generated by combustion in the combustion chamber 13 of each cylinder is introduced to the turbine 16B of the turbocharger 16 through the exhaust manifold 26. When the turbine 16B is driven by force of the introduced exhaust gas, the compressor 16A provided in the intake passage 12 is driven in association with the turbine 16B, whereby the air is compressed.

Meanwhile, part of the exhaust gas generated due to the combustion is introduced to the EGR passage 28. The exhaust gas introduced to the EGR passage 28 is purified by the EGR cooler catalyst 29, is cooled by the EGR cooler 31, and then is recirculated to the air on the downstream side of the intake throttle valve 18 in the intake passage 12. The amount of the exhaust gas thus recirculated is adjusted by controlling the opening degree of the EGR valve 32.

The engine 10 is configured as described above. Next, the exhaust gas control apparatus 11 for purifying the exhaust gas discharged from the engine 10 will be described. The exhaust gas control apparatus 11 includes an exhaust gas fuel supply valve 33, and three catalyst converters that are exhaust gas control catalysts (a first catalyst converter 34, a second catalyst converter 35, and a third catalyst converter 36).

The first catalyst converter 34 is provided downstream of the turbine 16B. The first catalyst converter 34 supports a storage reduction NOx catalyst. The first catalyst converter 34 stores nitrogen oxides NOx in the exhaust gas. In addition, the first catalyst converter 34 reduces and removes the stored nitrogen oxides NOx using supplied unburned fuel components that serve as a reducing agent. The second catalyst converter 35 is provided downstream of the first catalyst converter 34. The second catalyst converter 35 is formed using porous material which permits gas components in the exhaust gas to pass therethrough, and inhibits the particulate matter in the exhaust gas from passing therethrough. The second catalyst converter 35 supports the storage reduction NOx catalyst. The third catalyst converter 36 is provided downstream of the second catalyst converter 35. The third catalyst converter 36 supports an oxidation catalyst for purifying the exhaust gas by oxidizing the hydrocarbon HC and carbon monoxide CO in the exhaust gas.

The exhaust gas fuel supply valve 33 is provided in an exhaust gas collection portion of the exhaust manifold 26. Also, the exhaust gas fuel supply valve 33 is connected to the fuel pump 24 via a fuel passage 37. The exhaust gas fuel supply valve 33 injects and supplies the fuel supplied from the fuel pump 24 into the exhaust gas as the reducing agent. The exhaust gas is temporarily brought into the reduction atmosphere by the supplied fuel, whereby the nitrogen oxides NOx stored in the first catalyst converter 34 and the second catalyst converter 35 are reduced and removed. Further, the particulate matter is captured at the same time in the second catalyst converter 35.

An electronic control unit 41 controls the engine 10 and the exhaust gas control apparatus 11 that have been described. The electronic control unit 41 includes a CPU for performing various processings related to the control of the engine 10, a ROM for storing programs and data required for the control, a RAM for storing the results of the processings performed by the CPU, and the like, a backup RAM for storing and maintaining various data even after electric supply is stopped, input/output ports for receiving and outputting information from and to the outside, and the like.

The input port of the electronic control unit 41 is connected to an air flow meter 42 for detecting the flow amount of air in the intake passage 12 (intake air amount), an NE sensor 43 for detecting an engine rotational speed (NE), a throttle sensor 44 for detecting the opening degree of the intake throttle valve 18 (throttle valve opening degree), and a coolant temperature sensor 45 for detecting the temperature of the coolant of the engine 10. Further, the input port is connected to an accelerator sensor 46 for detecting the depression amount of an accelerator pedal (accelerator operation amount), a vehicle speed sensor 47 for detecting a running speed of the vehicle (vehicle speed), and the like. Also, an output port of the electronic control unit 41 is connected to the intake throttle valve 18, the fuel injection valve 21, the fuel pump 24, the exhaust gas fuel supply valve 33, the EGR valve 32, and the like. The electronic control unit 41 performs various operation controls for the engine 10 by controlling the devices connected to the output port, based on the results of detection performed by the sensors 42 to 47.

The various operation controls include a fuel injection control, a throttle valve control, an EGR control, a control related to purification of the exhaust gas, and the like. For example, in the fuel injection control, the amount of the fuel injected from the fuel injection valve 21 and the injection timing are decided. When the fuel injection amount is decided, a basic fuel injection amount (basic injection time period) is calculated according to the engine operating state such as the engine rotational speed and the accelerator operation amount, by referring to a map or the like. Then, the basic injection time period is corrected based on the coolant temperature, the intake air amount, and the like, whereby a final injection time period is decided. When the fuel injection timing is decided, basic fuel injection timing is calculated according to the engine operating state such as the engine rotational speed and the accelerator operation amount, by referring to a predetermined map or the like. The basic injection timing is corrected based on the coolant temperature, the intake air amount, and the like, whereby final injection timing is decided. Thus, after the injection time period and the injection timing are decided, when the output signal of the NE sensor 43 matches an injection start time, electric current starts to be supplied to the fuel injection valve 21. When the injection time period has elapsed since the injection start time, supply of the electric current is stopped.

In the throttle valve control, for example, a target throttle valve opening degree is calculated according to the engine rotational speed and the accelerator operation amount. The intake throttle valve 18 is controlled such that the actual throttle valve opening degree detected by the throttle sensor 44 becomes close to the target throttle valve opening degree.

In the EGR control, for example, it is determined whether a condition for performing the EGR control is satisfied based on the engine rotational speed, the coolant temperature, the accelerator operation amount, and the like. The condition for performing the EGR control includes a condition that the coolant temperature is equal to or higher than a predetermined value, a condition that the engine 10 has continued to be operated for a predetermined time or more since the engine 10 is started, a condition that the amount of a change in the accelerator operation amount is a positive value, and the like. If the condition for performing the EGR control is not satisfied, the EGR valve 32 is maintained in a fully closed state. If the condition for performing the EGR control is satisfied, a target opening valve degree of the EGR valve 32 is calculated according to the engine rotational speed, the accelerator operation amount, and the like, by referring to a predetermined map or the like.

Further, in the EGR control, a feedback control for the EGR valve opening degree is performed using the intake air amount as a parameter. In the feedback control, for example, a target intake air amount of the engine 10 is decided using the accelerator operation amount, the engine rotational speed, and the like as parameters. The actual intake air amount detected by the air flow meter 42 is compared with the target intake air amount. When the actual intake air amount is smaller than the target intake air amount, the EGR valve 32 is closed by a predetermined degree. In this case, the amount of the EGR gas flowing into the intake passage 12 from the EGR passage 28 is decreased, and accordingly, the amount of the EGR gas taken in the combustion chamber 13 is decreased. As a result, the amount of fresh air taken in the combustion chamber 13 is increased by an amount corresponding to the amount by which the EGR gas is decreased.

Meanwhile, when the actual intake air amount is larger than the target intake air amount, the EGR valve 32 is opened by a predetermined amount. In this case, the amount of the EGR gas flowing into the intake passage 12 from the EGR passage 28 is increased, and accordingly, the amount of the EGR gas taken in the combustion chamber 13 is increased. As a result, the amount of fresh air taken in the combustion chamber 13 is decreased by an amount corresponding to the amount by which the EGR gas is increased.

In the case where the amount of the EGR gas needs to be increased, when the EGR valve 32 is in the fully opened state, the intake throttle valve 18 is closed by a predetermined degree. In this case, the degree of intake negative pressure (the difference between the atmospheric pressure and the intake pressure) becomes large on the downstream side of the intake throttle valve 18 in the intake passage 12. Therefore, the amount of the EGR gas taken in the intake passage 12 from the EGR passage 28 is increased.

The control related to purification of the exhaust gas includes a control for the exhaust gas control catalyst. In the control for the exhaust gas control catalyst, four catalyst control modes, that are, a catalyst recovery control mode, a sulfur poisoning recovery control mode, a NOx reduction control mode, and a normal control mode are set. The electronic control unit 41 selects and performs the catalyst control mode according to the states of the catalyst converters 34 to 36.

In the catalyst recovery control mode, the particulate matter accumulated particularly in the second catalyst converter 35 reacts with oxygen in air (i.e., the particulate matter is burned), the particulate matter is changed to carbon dioxide CO₂ and water H₂O, and CO₂ and H₂O are discharged, whereby the second catalyst converter 35 is recovered. Heat is generated due to the oxidation reaction. As the amount of the particulate matter becomes larger, and as the amount of air (oxygen) becomes larger, the amount of generated heat becomes larger.

When the catalyst recovery control is performed, the amount of the particulate matter accumulated in the second catalyst converter 35 is estimated based on the operating state of the engine 10. For example, the amount of generated particulate matter is obtained each time the fuel injection is performed, using a map in which a relationship between the fuel injection amount and the engine rotational speed, and the amount of generated particulate matter is predefined. The amount of the accumulated particulate matter is obtained by accumulating the amount of generated particulate matter which is obtained each time the fuel injection is performed.

When a predetermined condition for recovery is satisfied, the exhaust gas fuel supply valve 33 which is provided separately from the fuel injection valve 21 for driving the engine supplies the fuel to a portion upstream of the second catalyst converter 35 in the exhaust passage 14. The condition for recovery includes a condition that the estimated amount of the accumulated particulate matter is equal to or larger than a predetermined value α. The supplied fuel is burned in the second catalyst converter 35, and heat is generated. By repeatedly supplying the fuel, the temperature of the second catalyst converter 35 (the catalyst temperature and the catalyst bed temperature) is increased to a temperature at which the particulate matter can be removed (approximately 600 °C) due to the generated heat. As a result, the particulate matter is burned and removed, and the second catalyst converter 35 is recovered.

The second catalyst converter 35 can perform the exhaust gas control function in a certain temperature range, and cannot purify the exhaust gas at atmospheric temperature higher than the upper limit value of the temperature range (hereinafter, referred to as "upper limit temperature", approximately 800 °C). Therefore, the catalyst recovery control needs to be performed such that the catalyst temperature of the second catalyst converter 35 does not exceed the upper limit temperature.

Meanwhile, in the engine 10, the air contained in the exhaust gas removes the heat of the second catalyst converter 35 while passing through the second catalyst converter 35, thereby suppressing an increase in the catalyst temperature. Accordingly, by appropriately using the air which removes the heat, the amount of heat generated in the second catalyst converter 35 and the amount of heat removed from the second catalyst converter 35 can be balanced. As a result, the aforementioned requirement can be satisfied, that is, the catalyst temperature can be prevented from exceeding the upper limit temperature. When the vehicle is decelerated due to deceleration of the engine 10, the amount of the exhaust gas is decreased, and accordingly the amount of the air in the exhaust gas is decreased. Therefore, the amount of heat removed by the air is small as compared to when the vehicle is not decelerated.

In the sulfur poisoning recovery control mode, sulfur components are discharged so that the NOx storage reduction catalysts in the first catalyst converter 34 and the second catalyst converter 35 recover from sulfur poisoning when the NOx storage reduction catalysts in the first catalyst converter 34 and the second catalyst converter 35 are poisoned with sulfur and the NOx storage capacity is decreased. In this mode, the catalyst temperature is increased to a high temperature (for example, 600 to 700 °C) by repeatedly supplying the fuel from the exhaust gas fuel supply valve 33. In the NOx reduction control mode, the nitrogen oxides NOx stored in the first catalyst converter 34 and the second catalyst converter 35 is reduced to nitrogen N₂, carbon dioxide CO₂, and water H₂O, and then the nitrogen N₂, the carbon dioxide CO₂, and the water H₂O are discharged. In this mode, the catalyst temperature is made relatively low (for example, 250 to 500 °C) by intermittently supplying the fuel from the exhaust gas fuel supply valve 33 at relatively long time intervals. The catalyst control mode other than the catalyst recovery control mode, the sulfur poisoning recovery control mode, and the NOx reduction control mode is the normal control mode. In the normal control mode, the reducing agent is not supplied from the exhaust gas fuel supply valve 33.

When the engine 10 and the vehicle are decelerated during the catalyst recovery control, the intake throttle valve 18 may be fully opened, or substantially fully opened as a measure for preventing the catalyst temperature of the second catalyst converter 35 from exceeding the upper limit temperature. In this case, the amount of air contained in the exhaust gas is increased, and the amount of heat removed by the air in the exhaust gas while the air in the exhaust gas passes through the second catalyst converter 35 is increased, whereby the increase in the catalyst temperature is suppressed.

However, this measure may be ineffective when the amount of the accumulated particulate matter is large. That is, when the actual amount of the accumulated particulate matter is larger than the estimated value during the catalyst recovery control, a catalyst recovery time period in the catalyst recovery control is shorter than the time period required for recovering the second catalyst converter 35. Accordingly, the particulate matter is not burned and removed completely, and part of the particulate matter remains accumulated. When the engine 10 is decelerated and the intake throttle valve 18 is fully opened or substantially fully opened while the amount of the accumulated particulate matter is large, the amount of the exhaust gas is decreased due to deceleration, and the amount of heat removed by the air in the exhaust gas is decreased. Meanwhile, since the amount of the accumulated particulate matter is large, and the amount of oxygen supplied due to opening of the intake throttle valve 18 is large, the amount of heat generated due to the oxidation of the particulate matter becomes large. As a result, the amount of heat generated due to the oxidation of the particulate matter becomes larger than the amount of heat removed by the air in the exhaust gas. Therefore, the catalyst temperature may exceed the upper limit temperature.

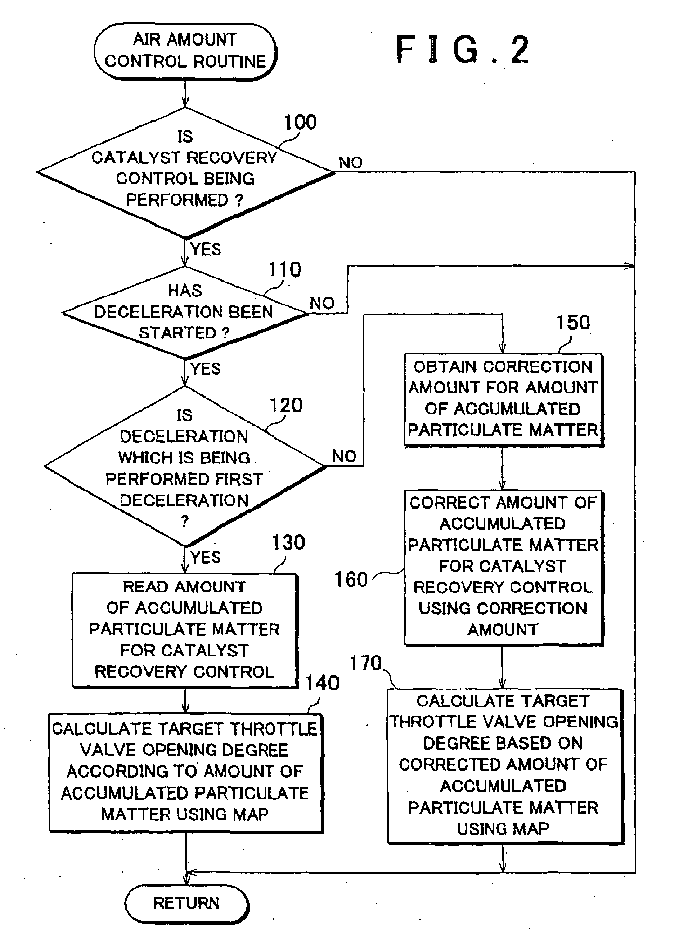

Accordingly, in the embodiment of the invention, when the engine 10 is decelerated while the amount of the accumulated particulate matter is large during the catalyst recovery control, the increase in the amount of air taken in the combustion chamber 13 is suppressed by a large amount, as compared to when the engine 10 is decelerated while the amount of the accumulated particulate matter is small. Next, this control (hereinafter, referred to as "air amount control routine) will be described in detail with reference to a flowchart in FIG. 2.

First, in step 100, the electronic control unit 41 determines whether the catalyst recovery control is being performed. For example, it is determined whether the catalyst recovery control mode is selected and is being performed. When a negative determination is made in step 100 (i.e., it is determined that the catalyst recovery control is not being performed), the air amount control routine is terminated. When an affirmative determination is made in step 100 (i.e., it is determined that the catalyst recovery control is being performed), it is determined whether deceleration of the engine 10 and the vehicle has been started in step 110. For example, it is determined that the vehicle speed detected by the vehicle speed sensor 47 is lower than that in a previous control cycle. When a negative determination is made in step 110, the air amount control routine is terminated. When an affirmative determination is made in step 110, it is determined whether the deceleration which is being performed is the first deceleration after the catalyst control mode is changed to the catalyst recovery control mode from the other mode in step 120.

When an affirmative determination is made (i.e., when it is determined that the first deceleration is being performed), the amount of the accumulated particulate matter is read for the catalyst recovery control in step 130. The amount of the accumulated particulate matter has been calculated for the catalyst recovery control by a separate routine, based on the engine operating state (for example, the fuel injection amount and the engine rotational speed), as described above.

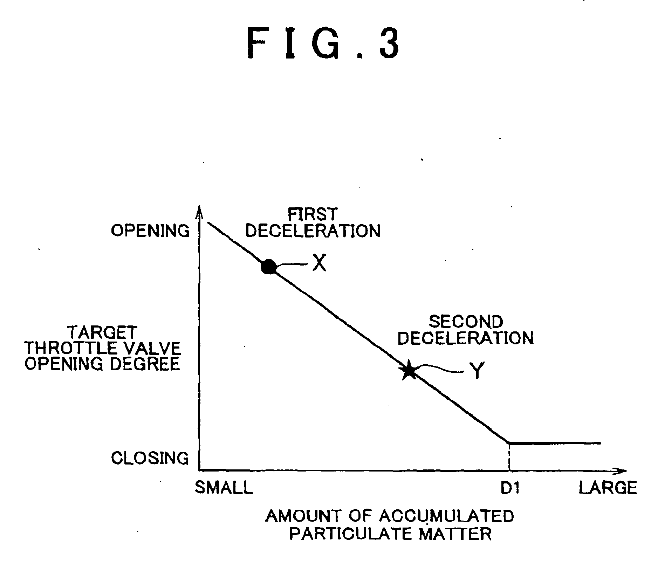

Subsequently, in step 140, the target throttle valve opening degree of the intake throttle valve 18 is calculated according to the amount of the accumulated particulate matter. When calculating the target throttle valve opening degree of the intake throttle valve 18, for example, a reference is made to a map in FIG. 3 in which the relationship between the amount of the accumulated particulate matter and the target throttle valve opening degree is predefined. In this map, tendency is different between a region where the amount of the accumulated particulate matter is equal to or smaller than a value D1 and a region where the amount of the accumulated particulate matter is larger than the value D1. In the region where the amount of the accumulated particulate matter is equal to or smaller than the value D1, the target throttle valve opening degree is the maximum or substantially the maximum value when the amount of the accumulated particulate matter is small, and is decreased as the amount of the accumulated particulate matter is increased.

The relationship between the amount of the accumulated particulate matter and the target throttle valve opening degree is thus predefined so that the amount of heat generated due to the oxidation reaction of the particulate matter can be made substantially constant, and accordingly the catalyst temperature can be made substantially constant irrespective of the amount of the accumulated particulate matter, by changing the amount of air according to the amount of the accumulated particulate matter, since the amount of generated heat is decided by the amount of the particulate matter (the amount of the accumulated particulate matter) and the amount of air (oxygen) involved in the oxidation. That is, when the amount of the accumulated particulate matter is large, the amount of air is decreased so as to suppress heat generation. Meanwhile, when the amount of the accumulated particulate matter is small, the amount of air is increased so as to promote heat generation.

In the map, in the region where the amount of the accumulated particulate matter is larger than the value D1, the target throttle valve opening degree is set to a value corresponding to full closing, irrespective of the amount of the accumulated particulate matter. Thus, according to the map, when the amount of the accumulated particulate matter is larger than the value D1, the intake throttle valve 18 is always fully closed.

When the amount of the accumulated particulate matter obtained based on the engine operating state is relatively small at the time of the first deceleration, the target throttle valve opening degree is set to a large value, as shown by a point X in FIG. 3. Then, after the process in step 140 is performed, the air amount control routine is terminated.

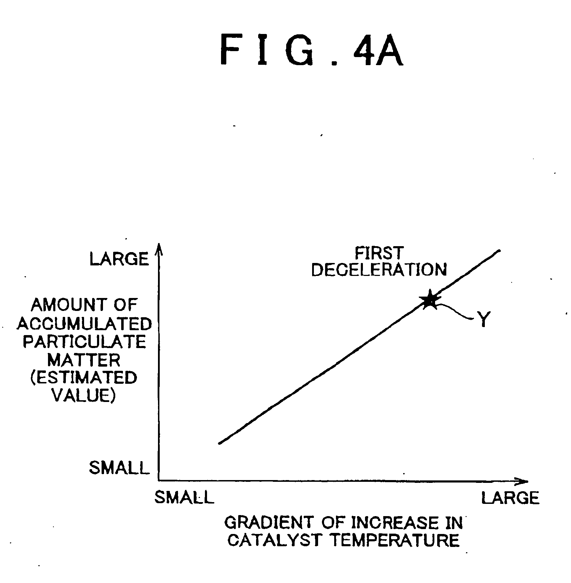

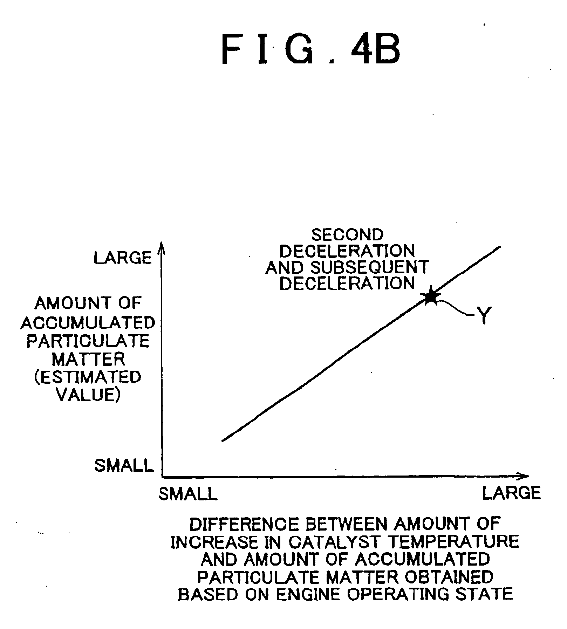

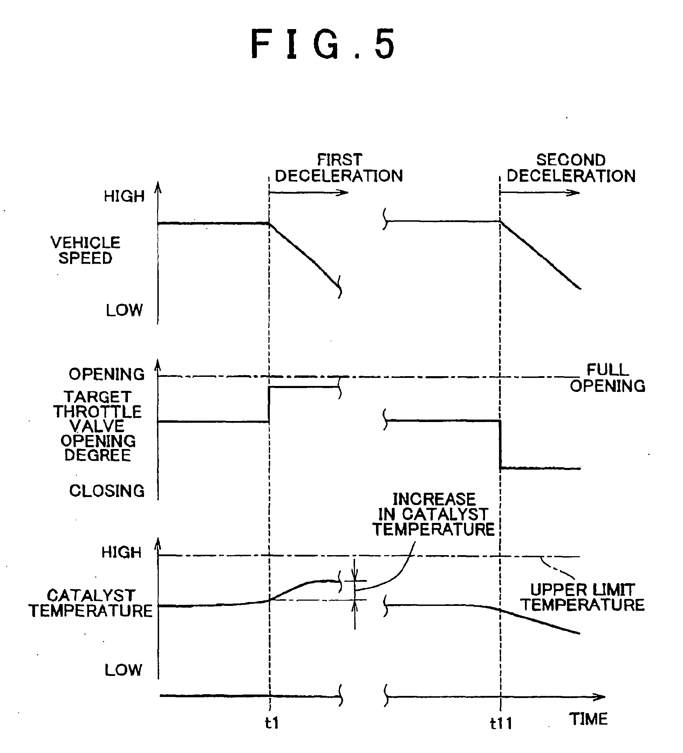

Meanwhile, when a negative determination is made in step 120, that is, when it is determined that the deceleration which is being performed is the second or subsequent deceleration after the catalyst control mode is changed to the catalyst recovery control mode from the other mode, the routine proceeds to step 150. In step 150, the estimated amount of the accumulated particulate matter is obtained based on the gradient of the increase in the catalyst temperature at the time of the first deceleration, using a map in FIG. 4A. Also, a correction amount for the amount of the accumulated particulate matter (the amount of the accumulated particulate matter that is obtained based on the engine operating state at the second deceleration and the subsequent deceleration) is obtained using a map in FIG. 4B. The correction amount is obtained based on the difference between the amount of the accumulated particulate matter that is obtained based on the gradient of the increase in the catalyst temperature and the amount of the accumulated particulate matter that is obtained based on the engine operating state at the time of the first deceleration. The gradient of the increase in the catalyst temperature is the amount of the increase in the catalyst temperature per unit time (refer to FIG. 5). For example, the gradient of the increase in the catalyst temperature that is calculated by a separate routine may be used.

For example, the catalyst temperature can be estimated based on the engine operating state. Since the catalyst temperature becomes higher as the engine rotational speed becomes higher, and as the engine load becomes higher, the estimated value of the catalyst temperature (estimated catalyst temperature) can be calculated based on the engine rotational speed, the engine load, and the like. For example, the estimated catalyst temperature is calculated based on the present engine rotational speed and the present engine load according to a map in which the relationship between the engine rotational speed and the engine load, and the estimated catalyst temperature is defined, and the estimated catalyst temperature is used as the catalyst temperature.

In general, as the amount of the accumulated particulate matter becomes larger, the amount of heat generated due to the oxidation reaction tends to be larger, and the gradient (degree) of the increase in the catalyst temperature tends to be larger irrespective of the degree of deceleration, while the exhaust gas control catalyst is recovered. Therefore, by predefining the relationship between the gradient of the increase in the catalyst temperature and the amount of the accumulated particulate matter, the amount of the accumulated particulate matter can be estimated based on the gradient of the increase in the catalyst temperature.

Accordingly, the amount of the accumulated particulate matter is estimated according to the gradient of the increase in the catalyst temperature, using the map in FIG. 4A in which the relationship between the gradient of the increase in the catalyst temperature and the amount of the accumulated particulate matter is defined (refer to a point X in FIG. 4A). In this map, when the gradient of the increase in the catalyst temperature is small, the amount of the accumulated particulate matter is small. Also, as the gradient of the increase in the catalyst temperature becomes larger, the amount of the accumulated particulate matter becomes larger.

In step S160, the correction amount obtained in step 150 is reflected in the catalyst recovery control. That is, the amount of the accumulated particulate matter, which is calculated for the catalyst recovery control based on the engine operating state by the separate routine, is corrected using the correction amount obtained in step 150. This correction makes it possible to perform the catalyst recovery control based on the more accurate amount of the accumulated particulate matter during a catalyst recovery time period required for burning and removing the particulate matter.

Next, in step 170, the target throttle valve opening degree of the intake throttle valve 18 is calculated based on the amount of the accumulated particulate matter thus corrected, referring to the map in FIG. 3 which is used in the aforementioned step 140 (refer to a point Y in FIG. 3). As described above, as the amount of the accumulated particulate matter becomes larger, the target throttle valve opening degree is set to a smaller value in the map in FIG. 3. Therefore, as the gradient of the increase in the catalyst temperature becomes larger, the target throttle valve opening degree is set to a smaller value.

Then, after the process in step 170 is performed, the air amount control routine is terminated. The target throttle valve opening degree calculated in steps 140, 170 is used as the target throttle valve opening degree in the aforementioned throttle valve control. The intake throttle valve 18 is controlled such that the actual throttle valve opening degree detected by the throttle sensor 44 becomes close to the target throttle valve opening degree.

The processes in step 130 to step 170 in the aforementioned air amount control routine performed by the electronic control unit 41 can be regarded as the control means. According to the air amount control routine, for example, the vehicle speed, the target throttle valve opening degree, and the catalyst temperature vary as shown in FIG. 5. When the first deceleration is started at time t1 after the catalyst control mode is changed to the catalyst recovery control mode from the other mode, the processes in step 100 to step 140 are performed in this order. Since the gradient of the increase in the catalyst temperature has not been obtained at this point, the target throttle valve opening degree is calculated according to the amount of the accumulated particulate matter obtained based on the engine operating state, using the map in FIG. 3. For example, the target throttle valve opening degree which is larger than the throttle valve opening degree before time t1 is obtained. Then, the intake throttle valve 18 is controlled such that the actual throttle valve opening degree becomes close to the target throttle valve opening degree. Since the intake throttle valve 18 is opened, the intake air amount is changed (increased). Accordingly, the amount of heat generated due to the oxidation reaction of the particulate matter is changed, and the catalyst temperature is changed. Since the gradient of the increase in the catalyst temperature at the time of the first deceleration has been obtained at the time of the second deceleration (at time t11) and the subsequent deceleration, the amount of the accumulated particulate matter that is corrected based on the gradient of the increase in the catalyst temperature is obtained using the maps in FIGS. 4A and 4B (step 160), and the target throttle valve opening degree is obtained based on the corrected amount of the accumulated particulate matter using the map in FIG. 3 (step 170). Thus, the target throttle valve opening degree is calculated using the amount of the accumulated particulate matter which is more accurate than that calculated based on the engine operating state (the fuel injection amount and the engine rotational speed) without considering the gradient of the increase in the catalyst temperature. Since the intake throttle valve 18 is controlled such that the throttle valve opening degree becomes close to the target throttle valve opening degree, an excessive increase in the catalyst temperature can be suppressed.

According to the embodiment that has been described in detail, the following effects can be obtained.
(1) When the engine 10 (vehicle) is decelerated, the amount of heat removed by the air in the exhaust gas is smaller than when the engine 10 (vehicle) is not decelerated. Also, during the catalyst recovery control, the particulate matter accumulated in the second catalyst converter 35 reacts with air (oxygen) (i.e., the oxidation reaction occurs), and heat is generated. The amount of generated heat becomes larger as the amount of the particulate matter becomes larger, and as the amount of air (oxygen) becomes larger. The degree of the change (increase) in the catalyst temperature is decided depending on the balance between the amount of heat removed by the air in the exhaust gas and the amount of heat generated due to the oxidation of the particulate matter.
   In the embodiment, when the engine 10 (vehicle) is decelerated while the amount of the particulate matter is large during the catalyst recovery control, the increase in the amount of air taken in the engine 10 is suppressed by a large amount as compared to when the engine 10 (vehicle) is decelerated while the amount of the particulate matter is small, whereby the amount of oxygen involved in the oxidation reaction is decreased, and accordingly the amount of heat generated due to the oxidation reaction is decreased. Therefore, unlike the technology disclosed in the Japanese Patent Laid-Open Publication No. 2002-371889, it is possible to prevent the situation where the catalyst temperature is excessively increased to exceed the upper limit temperature, and the exhaust gas control function of the second catalyst converter is damaged.
(2) As the amount of the accumulated particulate matter becomes larger, the increase in the intake air amount is suppressed by a larger amount, that is, the intake air amount is smaller (refer to FIG. 3). Therefore, when the amount of the accumulated particulate matter is small, the increase in the intake air amount is suppressed by a small amount. Though the amount of the particulate matter.involved in the oxidation reaction is small, the amount of oxygen is large. Meanwhile, when the amount of the accumulated particulate matter is large, the increase in the intake air amount is suppressed by a large amount. Though the amount of the particulate matter involved in the oxidation reaction is large, the amount of oxygen is small. Accordingly, the amount of heat generated due to burning of the particulate matter can be made substantially constant irrespective of the amount of the accumulated particulate matter, and the catalyst temperature can be made substantially constant.
(3) When the engine 10 (vehicle) is decelerated while the amount of the accumulated particulate matter is large during the catalyst recovery control, the target throttle valve opening degree is set to a small value so that the opening operation of the intake throttle valve 18 is suppressed, as compared to when the engine 10 (vehicle) is decelerated while the amount of the accumulated particulate matter is small. Owing to this suppression, it is possible to suppress the increase in the amount of air taken in the combustion chamber 13 through the intake passage 12, and to decrease the amount of oxygen involved in the oxidation reaction of the particulate matter accumulated in the second catalyst converter 35.
(4) In general, there is a certain relationship between the accumulation of the particulate matter and the gradient of the increase in the catalyst temperature during the catalyst recovery control. Therefore, by predefining the relationship between the amount of the accumulated particulate matter and the gradient of the increase in the catalyst temperature (refer to the map in FIG. 4A), the amount of the accumulated particulate matter can be estimated based on the gradient of the increase in the catalyst temperature.
(5) In the certain relationship described in the above (4), as the amount of the accumulated particulate matter becomes larger, the amount of heat generated due to the oxidation reaction becomes larger, and the gradient of the increase in the catalyst temperature becomes larger. Thus, in the embodiment of the invention, the map in FIG. 4A is configured such that as the gradient of the increase in the catalyst temperature becomes larger, the amount of the accumulated particulate matter becomes larger. Therefore, by using this map, the amount of the accumulated particulate matter can be estimated with high accuracy based on the gradient of the increase in the catalyst temperature.
(6) The amount of the accumulated particulate matter estimated based on the gradient of the increase in the catalyst temperature is reflected in the amount of the accumulated particulate matter for the catalyst recovery control (step 160). The catalyst recovery time period is changed based on the amount of the accumulated particulate matter thus obtained. Thus, it is possible to prevent the situation where the second catalyst converter 35 cannot be recovered completely, that is the situation where the particulate matter is not burned and removed completely, and part of the particulate matter remains accumulated.
(7) The target throttle valve opening degree at the time of the first deceleration and the target throttle valve opening degrees at the time of the second deceleration and the subsequent deceleration in the same catalyst recovery control mode are obtained using the common map (step 140, step 170). Therefore, the number of maps can be reduced as compared to when separate maps are used at the time of the first deceleration, and the second deceleration and the subsequent deceleration.

The invention can be realized in the following embodiments.

When the engine 10 and the vehicle is decelerated while the amount of the accumulated particulate matter is large during the catalyst recovery control, the increase in the intake air amount may be suppressed by opening the EGR valve 32 so as to increase the amount of the recirculated exhaust gas (EGR amount), instead of suppressing the opening operation of the intake throttle valve 18.

Thus, when the EGR amount is increased, the amount of air taken in the combustion chamber 13 is decreased by the amount corresponding to the amount by which the EGR amount is increased. Thus, the amount of oxygen involved in the oxidation reaction of the particulate matter accumulated in the second catalyst converter 35 is decreased. Accordingly, in this case as well, it is possible to prevent the situation where the catalyst temperature is excessively increased to exceed the upper limit temperature, and the exhaust gas control function of the exhaust gas control catalyst is damaged, as in the aforementioned embodiment.

The structure of the map in FIG. 4A may be appropriately changed as long as the amount of the accumulated particulate matter is large when the gradient of the increase in the catalyst temperature is large, as compared to when the gradient of the increase in the catalyst temperature is small. For example, a range of the values of the gradient may be divided into two or more regions, and the amount of the accumulated particulate matter may be set for each region (in this case, the amount of the accumulated particulate matter is the same in one region).

The structure of the map in FIG. 3 may be appropriately changed as long as the target throttle valve opening degree is set to a small value when the amount of the accumulated particulate matter is large, as compared to when the amount of the accumulated particulate matter is small. For example, the range of the values of the amount of the accumulated particulate matter may be divided into two or more regions, and the target throttle valve opening degree may be set for each region (in this case, the target throttle valve opening degree is the same in one region).

In the aforementioned embodiment, the target throttle valve opening degree may be directly calculated based on the gradient of the increase in the catalyst temperature, without obtaining the amount of the accumulated particulate matter. In the aforementioned embodiment, when the deceleration continues for a relatively long time, the gradient of the increase in the catalyst temperature may be calculated two or more times during the deceleration, and the amount of the accumulated particulate matter and the target throttle valve opening degree may be calculated based on the calculated gradients of the increase in the catalyst temperature.

The intake air amount may be maintained at a value before deceleration, instead of decreasing the amount by which the intake air amount is increased. Also, the intake air amount may be decreased, instead of suppressing the increase in the intake air amount. In the air amount control routine in FIG. 2, it may be determined which is larger between the amount of the accumulated particulate matter obtained based on the engine operating state and the amount of the accumulated particulate matter estimated based on the gradient of the increase in the catalyst temperature, and the target throttle valve opening degree may be calculated based on the amount of the accumulated particulate matter which is larger. In this case, only when the amount of the accumulated particulate matter estimated based on the gradient of the increase in the catalyst temperature is larger than the amount of the accumulated particulate matter obtained based on the engine operating state, the target throttle valve opening degree is calculated according to the amount of the accumulated particulate matter estimated based on the gradient of the increase in the catalyst temperature.

When the amount of the accumulated particulate matter is small, and the gradient of the increase in the catalyst temperature is small, there is no possibility that the catalyst temperature exceeds the upper limit temperature. In this case, it is preferable to promote burning of the particulate matter in order to recover the exhaust gas control catalyst.

Accordingly, only when the gradient of the increase in the catalyst temperature is equal to or larger than a predetermined reference value as a result of comparison therebetween, the increase in the intake air amount may be suppressed, and when the gradient of the increase in the catalyst temperature is smaller than the reference value, the increase in the intake air amount may not be suppressed. Also, only when the amount of the accumulated particulate matter estimated based on the gradient of the increase in the catalyst temperature is equal to or larger than a certain value (a predetermined value) as a result of comparison therebetween, the increase in the intake air amount may be suppressed, and when the amount of the accumulated particulate matter is smaller than the predetermined value, the increase in the intake air amount may not be suppressed.

The reference value (or the predetermined value) may be set to the largest value in a region in which the catalyst temperature does not exceed the upper limit temperature even if the increase in the amount of air taken in the internal combustion engine is not suppressed, in an entire range of values of the gradient (or the estimated amount of the accumulated particulate matter).

It may be determined whether it is necessary to suppress the increase in the intake air amount. In this case, only when necessary, the increase in the intake air amount is suppressed to suppress damage to the exhaust gas control function, and when unnecessary, priority is given to recovery of the exhaust gas control catalyst.

Also, as the difference between the gradient of the increase in the catalyst temperature and the reference value (or the predetermined value) becomes larger, the increase in the intake air amount is suppressed by a larger amount such that the intake air amount becomes smaller. In this case, the particulate matter can be oxidized (burned) by oxygen of the amount corresponding to the amount of the accumulated particulate matter, and the amount of generated heat can be made substantially constant irrespective of the amount of the accumulated particulate matter. Accordingly, an excessive increase in the catalyst temperature can be effectively suppressed.

## Claims

1. An exhaust gas control apparatus for an internal combustion engine, which includes an exhaust gas control catalyst (35) provided in an exhaust passage (14) for the internal combustion engine, and in which the exhaust gas control catalyst (35) is recovered by burning and removing particulate matter accumulated in the exhaust gas control catalyst (35), the internal combustion engine further includes an intake throttle valve (18) which adjusts an amount of air taken in a combustion chamber through an intake passage, the exhaust gas control apparatus being
**characterized by** comprising:
control means (41) for controlling an increase in an amount of air taken in the internal combustion engine by controlling an opening operation of the intake throttle valve (18) during catalyst recovery control, wherein, when the engine is decelerating during catalyst recovery control, the control means opens the throttle valve (18) to prevent the catalyst (35) from exceeding an upper limit temperature, wherein, when an amount of the accumulated particulate matter is large, the intake throttle valve (18) is controlled to be less open, as compared to when the amount of the accumulated particulate matter is small.

2. The exhaust gas control apparatus according to claim 1, wherein the control means (41) suppresses the increase in the amount of air taken in the internal combustion engine by a larger amount as the amount of the accumulated particulate matter becomes larger.

3. The exhaust gas control apparatus according to claim 1, wherein the control means (41) opens the intake throttle valve (18) when the amount of the accumulated particulate matter is smaller than a predetermined value (D1) while the internal combustion engine is decelerated, and wherein the control for the intake throttle valve (18) when the amount of accumulated particulate matter is larger than the predetermined value (D1) is different from that for the intake throttle valve (18) when the amount of accumulated particulate matter is equal to or lesss than the predetermined value (D1).

4. The exhaust gas control apparatus according to any one of claims 1 to 3, wherein the internal combustion engine includes an exhaust gas recirculation device (27) which recirculates part of exhaust gas to a combustion chamber through an intake passage; and the control means (41) suppresses the increase in the amount of air taken in the internal combustion engine by increasing an amount of exhaust gas which is recirculated by the exhaust gas recirculation device (27).

5. The exhaust gas control apparatus according to any one of claims 1 to 4, wherein the control means (41) makes a determination on the amount of the accumulated particulate matter based on a gradient of an increase in a temperature of the exhaust gas control catalyst (35), and suppresses the increase in the amount of air taken in the internal combustion engine using a result of the determination.

6. The exhaust gas control apparatus according to claim 5, wherein the control means (41) determines that the amount of the accumulated particulate matter is large, and suppresses the increase in the amount of air taken in the internal combustion engine when the gradient of the increase in the temperature of the exhaust gas control catalyst (35) is equal to or larger than a reference value.

7. The exhaust gas control apparatus according to any one of claims 1 to 5, wherein the control means (41) suppresses the increase in the amount of air taken in the internal combustion engine by a larger amount as a difference between the gradient of the increase in the temperature of the exhaust gas control catalyst (35) and a predetermined reference value becomes larger.

8. The exhaust gas control apparatus according to any one of claims 1 to 4, wherein the control means (41) estimates the amount of the accumulated particulate matter based on a gradient of the increase in the temperature of the exhaust gas control catalyst (35), and suppresses the increase in the amount of air taken in the internal combustion engine when the estimated amount of the accumulated particulate matter is equal to or larger than a predetermined amount.

9. The exhaust gas control apparatus according to any one of claims 1 to 8, wherein the intake throttle valve (18) is fully opened or substantially fully opened when the amount of particulate matter is equal to or less than the predetermined value (D1).

10. A method in which an exhaust gas control catalyst (35) provided in an exhaust passage (14) for an internal combustion engine is recovered by burning and removing particulate matter accumulated in the exhaust gas control catalyst (35), **characterized by** comprising the steps of:
determining whether an amount of the accumulated particulate matter is large; and
controlling an increase in an amount of air taken in the internal combustion engine during the catalyst recovery control by controlling an opening operation of the intake throttle valve (18), wherein, when the engine is decelerating during catalyst recovery control, the intake throttle valve (18) is opened to prevent the catalyst (35) from exceeding an upper limit temperature, and wherein, when it is determined that the amount of the accumulated particulate matter is large, the intake throttle valve (18) is controlled to be less open as compared to when it is determined that the amount of the accumulated particulate matter is small.

## Patentansprüche

1. Abgassteuerungsvorrichtung für einen Verbrennungsmotor, die einen Abgassteuerungskatalysator (35), der in einer Abgasleitung (14) des Verbrennungsmotors vorgesehen ist, aufweist, wobei der Abgassteuerungskatalysator (35) durch Verbrennen und Beseitigen von teilchenförmigem Material, das sich im Abgassteuerungskatalysator (35) angesammelt hat, regeneriert wird, wobei der Verbrennungsmotor ferner ein Ansaugdrosselventil (18) aufweist, das eine Luftmenge, die durch eine Ansaugleitung in eine Brennkammer gesaugt wird, anpasst,
wobei die Abgassteuerungsvorrichtung **dadurch gekennzeichnet ist, dass** sie Folgendes aufweist:
ein Steuerungsmittel (41) zum Steuern einer Steigerung der Luftmenge, die in den Verbrennungsmotor gesaugt wird, durch Steuern einer Öffnungsoperation des Ansaugdrosselventils (18) während einer Katalysatorregenerierungssteuerung, wobei, wenn die Drehzahl des Motors während der Katalysatorregenerierungssteuerung gesenkt wird, das Steuerungsmittel das Drosselventil (18) öffnet, um zu verhindern, dass der Katalysator (35) über eine Temperaturobergrenze hinaus erwärmt wird, wobei, wenn eine Menge an angesammeltem teilchenförmigem Material zu groß ist, das Ansaugdrosselventil (18) so gesteuert wird, dass es weniger weit geöffnet wird als wenn die Menge an angesammeltem teilchenförmigem Material gering ist.

2. Abgassteuerungsvorrichtung nach Anspruch 1, wobei das Steuerungsmittel (41) die Steigerung der Luftmenge, die in den Verbrennungsmotor gesaugt wird, umso mehr beschränkt, je größer die Menge an angesammeltem teilchenförmigem Material wird.

3. Abgassteuerungsvorrichtung nach Anspruch 1, wobei das Steuerungsmittel (41) das Ansaugdrosselventil (18) öffnet, wenn die Menge an angesammeltem teilchenförmigem Material kleiner ist als ein vorgegebener Wert (D1), während die Drehzahl des Verbrennungsmotors gesenkt wird, und wobei die Steuerung des Ansaugdrosselventils (18), wenn die Menge an angesammeltem teilchenförmigem Material größer ist als der vorgegebene Wert (D1), sich von der des Ansaugdrosselventils (18), wenn die Menge an angesammeltem teilchenförmigem Material bei oder unter dem vorgegebenen Wert (D1) liegt, unterscheidet.

4. Abgassteuerungsvorrichtung nach einem der Ansprüche 1 bis 3, wobei der Verbrennungsmotor eine Abgasrückführungseinrichtung (27) aufweist, die einen Teil des Abgases durch einen Ansaugkanal in eine Brennkammer zurückführt; und das Steuerungsmittel (41) die Steigerung der Luftmenge, die in den Verbrennungsmotor gesaugt wird, durch Erhöhen einer Abgasmenge, die durch die Abgasrückführungseinrichtung (27) zurückgeführt wird, begrenzt.

5. Abgassteuerungsvorrichtung nach einem der Ansprüche 1 bis 4, wobei das Steuerungsmittel (41) die Menge des angesammelten teilchenförmigen Materials auf der Basis eines Gradienten des Temperaturanstiegs des Abgassteuerungskatalysators (35) bestimmt und die Steigerung der Luftmenge, die in den Verbrennungsmotor gesaugt wird, anhand des Ergebnisses dieser Bestimmung begrenzt.

6. Abgassteuerungsvorrichtung nach Anspruch 5, wobei das Steuerungsmittel (41) bestimmt, dass die Menge des angesammelten teilchenförmigen Materials groß ist und die Steigerung der Luftmenge, die in den Verbrennungsmotor gesaugt wird, begrenzt, wenn der Gradient des Temperaturanstiegs des Abgassteuerungskatalysators (35) bei oder über einem Bezugswert liegt.

7. Abgassteuerungsvorrichtung nach einem der Ansprüche 1 bis 5, wobei das Steuerungsmittel (41) die Steigerung der Luftmenge, die in den Verbrennungsmotor gesaugt wird, umso mehr begrenzt, je größer ein Unterschied zwischen dem Gradienten des Temperaturanstiegs des Abgassteuerungskatalysators (35) und einem vorgegebenen Bezugswert wird.

8. Abgassteuerungsvorrichtung nach einem der Ansprüche 1 bis 4, wobei das Steuerungsmittel (41) die Menge des angesammelten teilchenförmigen Materials auf der Basis eines Gradienten des Temperaturanstiegs des Abgassteuerungskatalysators (35) bestimmt und die Steigerung der Luftmenge, die in den Verbrennungsmotor gesaugt wird, begrenzt, wenn die geschätzte Menge des angesammelten teilchenförmigen Materials bei oder über einer vorgegebenen Menge liegt.

9. Abgassteuerungsvorrichtung nach einem der Ansprüche 1 bis 8, wobei das Ansaugdrosselventil (18) vollständig oder im Wesentlichen vollständig geöffnet wird, wenn die Menge an teilchenförmigem Material bei oder unter dem vorgegebenen Wert (D1) liegt.

10. Verfahren, bei dem ein Abgassteuerungskatalysator (35), der in einer Abgasleitung (14) eines Verbrennungsmotors vorgesehen ist, durch Verbrennen und Beseitigen von teilchenförmigem Material, das sich im Abgassteuerungskatalysator (35) angesammelt hat, regeneriert wird,
**dadurch gekennzeichnet, dass** es die folgenden Schritte umfasst:
Bestimmen, ob eine Menge des angesammelten teilchenförmigen Materials groß ist; und Steuern einer Zunahme der Luftmenge, die während der Katalysatorregenerierungssteuerung in den Verbrennungsmotor gesaugt wird, durch Steuern einer Öffnungsoperation des Ansaugdrosselventils (18), wobei das Ansaugdrosselventil (18) geöffnet wird, wenn die Drehzahl des Motors während einer Katalysatorregenerierungssteuerung gesenkt wird, um zu verhindern, dass der Katalysator (35) eine Temperaturobergrenze übersteigt, und wobei, wenn bestimmt wird, dass die Menge des angesammelten teilchenförmigen Materials groß ist, die Einlassdrosselklappe (18) so gesteuert wird, dass sie weniger weit offen ist als wenn bestimmt wird, dass die Menge des angesammelten teilchenförmigen Materials klein ist.

## Revendications

1. Appareil de commande de gaz d'échappement pour un moteur à combustion interne, qui comprend un catalyseur de commande de gaz d'échappement (35) prévu dans un passage d'échappement (14) pour le moteur à combustion interne, et dans lequel le catalyseur de commande de gaz d'échappement (35) est régénéré en brûlant et en enlevant de la matière en particules accumulée dans le catalyseur de commande de gaz d'échappement (35), le moteur à combustion interne comprenant en outre un papillon d'admission (18) qui ajuste une quantité d'air admis dans une chambre de combustion par l'intermédiaire d'un passage d'admission, l'appareil de commande de gaz d'échappement étant **caractérisé en ce qu'**il comprend:
des moyens de commande (41) destinés à commander une augmentation d'une quantité d'air admis dans le moteur à combustion interne en commande une opération d'ouverture du papillon d'admission (18) pendant la commande de régénération de catalyseur, avec, lorsque le moteur ralentit pendant la commande de régénération de catalyseur, les moyens de commande qui ouvrent le papillon d'admission (18) afin d'empêcher le catalyseur (35) de dépasser une température limite supérieure, et, lorsqu'une quantité de matière en particules est accumulée est importante, le papillon d'admission (18) qui est commandé afin d'être moins ouvert, comparé au cas où la quantité de matière en particules accumulée est faible.

2. Appareil de commande de gaz d'échappement selon la revendication 1, dans lequel les moyens de commande (41) suppriment l'augmentation de la quantité d'air admis dans le moteur à combustion interne d'une quantité plus grande lorsque la quantité de la matière en particules accumulée devient plus grande.

3. Appareil de commande de gaz d'échappement selon la revendication 1, dans lequel les moyens de commande (41) ouvrent le papillon d'admission (18) lorsque la quantité de la matière en particules accumulée est plus faible qu'une valeur prédéterminée (D1) alors que le moteur à combustion interne est ralenti, et dans lequel la commande pour le papillon d'admission (18) lorsque la quantité de matière en particules accumulée est plus grande que la valeur prédéterminée (D1) est différente de celle pour le papillon d'admission (18) lorsque la quantité de matière en particules accumulée est égale ou inférieure à la valeur prédéterminée (D1).

4. Appareil de commande de gaz d'échappement selon l'une quelconque des revendications 1 à 3, dans lequel le moteur à combustion interne comprend un dispositif de recyclage de gaz d'échappement (27) qui recycle une partie des gaz d'échappement vers une chambre de combustion en passant par un passage d'admission; et les moyens de commande (41) suppriment l'augmentation de la quantité d'air admis dans le moteur à combustion interne en augmentant une quantité de gaz d'échappement qui est recyclée par le dispositif de recyclage de gaz d'échappement (27).

5. Appareil de commande de gaz d'échappement selon l'une quelconque des revendications 1 à 4, dans lequel les moyens de commande (41) réalisent une détermination de la quantité de la matière en particules accumulée sur la base d'un gradient d'une augmentation d'une température du catalyseur de commande de gaz d'échappement (35), et suppriment l'augmentation de la quantité d'air admis dans le moteur à combustion interne en utilisant un résultat de la détermination.

6. Appareil de commande de gaz d'échappement selon la revendication 5, dans lequel les moyens de commande (41) déterminent que la quantité de la matière en particules accumulée est importante, et suppriment l'augmentation de la quantité d'air admis dans le moteur à combustion interne lorsque le gradient de l'augmentation de la température du catalyseur de commande de gaz d'échappement (35) est égale ou supérieure à une valeur de référence.

7. Appareil de commande de gaz d'échappement selon l'une quelconque des revendications 1 à 5, dans lequel les moyens de commande (41) suppriment l'augmentation de la quantité d'air admis dans le moteur à combustion interne d'une quantité plus grande lorsqu'une différence entre le gradient de l'augmentation dans la température du catalyseur de commande de gaz d'échappement (35) et une valeur de référence prédéterminée devient plus grande.

8. Appareil de commande de gaz d'échappement selon l'une quelconque des revendications 1 à 4, dans lequel les moyens de commande (41) estiment la quantité de la matière en particules accumulée sur la base d'un gradient de l'augmentation de la température du catalyseur de commande de gaz d'échappement (35), et suppriment l'augmentation de la quantité d'air admis dans le moteur à combustion interne lorsque la quantité estimée de la matière en particules accumulée est égale ou supérieure à une quantité prédéterminée.

9. Appareil de commande de gaz d'échappement selon l'une quelconque des revendications 1 à 8, dans lequel le papillon d'admission (18) est totalement ouvert ou pratiquement totalement ouvert lorsque la quantité de matière en particules est égale ou inférieure à la valeur prédéterminée (D1).

10. Procédé dans lequel un catalyseur de commande de gaz d'échappement (35) prévu dans un passage d'échappement (14) pour un moteur à combustion interne est régénéré en brûlant et en enlevant de la matière en particules accumulée dans le catalyseur de commande de gaz d'échappement (35), **caractérisé en ce qu'**il comprend les étapes consistant à :
déterminer si une quantité de la matière en particules accumulée est grande; et commander une augmentation d'une quantité d'air admis dans le moteur à combustion interne pendant la commande de régénération de catalyseur en commandant une opération d'ouverture du papillon d'admission (18), avec, lorsque le moteur est ralenti pendant la commande de régénération de catalyseur, le papillon d'admission (18) qui est ouvert afin d'empêcher le catalyseur (35) de dépasser une température de limite supérieure, et, lorsque l'on détermine que la quantité de la matière en particules accumulée est grande, le papillon d'admission (18) qui est commandé afin d'être moins ouvert comparé au cas où l'on détermine que la quantité de la matière en particules accumulée est faible.
